# EUROPEAN PATENT APPLICATION

(11) **EP 4 443 086 A1**
(43) Date of publication of application: **09.10.2024**
(21) Application number: 22900642.4
(22) Date of filing: 01.12.2022
(51) Int. Cl.: F25D 23/12, F25D 17/04, B01D 53/32, B01D 53/86, F25D 29/00, F25D 11/00, C25B 1/01, C25B 1/02, C25B 9/17, C25B 15/023

(54) **ELECTROLYTIC DEOXYGENATION DEVICE, REFRIGERATOR HAVING SAME, AND CONTROL METHOD THEREFOR**

(30) Priority: 03.12.2021 CN 202111466835; 03.12.2021 CN 202111468131; 03.12.2021 CN 202111466848
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: MIAO, Jianlin, Qingdao, Shandong 266101 (CN); WANG, Ruilong, Qingdao, Shandong 266101 (CN); JI, Lisheng, Qingdao, Shandong 266101 (CN)
(74) Representative: Winter, Brandl - Partnerschaft mbB
(86) International application number: PCT/CN2022/136025
(87) International publication number: WO 2023/098838

(57) **Abstract**

Provided are an electrolytic deoxygenation device, a refrigerator having same, and a control method therefor. The electrolytic deoxygenation device comprises: at least one electrolytic deoxygenation unit configured to deplete oxygen outside the electrolytic deoxygenation device by means of an electrochemical reaction under the action of an electrolytic voltage; and a reaction container defining a liquid seal space and at least one reaction space therein, wherein one electrolytic deoxygenation unit is correspondingly assembled in one reaction space, and the liquid seal space is used to contain a liquid and is in communication with the reaction space by means of a gas path, such that gas generated when the electrolytic deoxygenation unit performs an electrochemical reaction flows through the liquid contained in the liquid seal space, and specific substance components in the gas are dissolved in the liquid seal space. Since specific substance components in the gas can be dissolved in the liquid seal space, the electrolytic deoxygenation device of the present invention has a filtering function, which facilitates mitigating or preventing environmental pollution caused by gas emission.

## Description

### TECHNICAL FIELD

The present application relates to preservation technologies, in particular to an electrolytic deoxygenation device, and a refrigerator having the same and a control method thereof.

### BACKGROUND

For some reaction devices, such as an electrolytic deoxygenation device for reducing oxygen in a refrigerator by an electrochemical reaction, a process of the electrochemical reaction needs the participation of an electrolytic solution, and will produce a gas which is required to be emitted to an external environment.

Because a lot of heat is generated in the reaction process, the electrolytic solution is heated to evaporate, which can lead to a small amount of electrolytic solution vapor in the gas emitted from a reaction container. Most electrolytic solutions are acidic or alkaline solutions, which are corrosive. If the gas generated in the reaction container is directly emitted into the air without treatment, it can lead to air pollution and endanger life health.

The electrolytic deoxygenation device consumes oxygen in a working environment by the electrochemical reaction under the action of an electrolytic voltage. The inventor has realized that, in general, in order to increase an oxygen consumption rate of the electrolytic deoxygenation device, it is required to increase the electrolytic voltage or a current flowing through an electrochemical element of the electrolytic deoxygenation device. As a result, a loss rate of the electrochemical element is increased, and the service life of the electrochemical element is shortened.

Due to heating for evaporation, the electrolytic solution in a reaction space of the reaction container is continuously decreasing in the reaction process, so it is required to carry out a liquid replenishing operation in time. The inventor has realized that how to accurately calculate a liquid replenishing amount to accurately replenish liquid has become an urgent technical problem for those skilled in the art.

The above information disclosed in the Background Art is only intended to increase understanding of the Background Art of this application, and thus, may include the prior art that does not constitute the knowledge known to a person of ordinary skill in the art.

### SUMMARY

An object of the present application is to overcome at least one technical defect in the prior art, and provide an electrolytic deoxygenation device, and a refrigerator having the same and a control method thereof.

In one aspect, a further object of the present application is to enable an electrolytic deoxygenation device to have a filtering function, so as to reduce or avoid environmental pollution caused by gas emissions.

In one aspect, a yet another object of the present application is to improve the resource utilization efficiency of the electrolytic deoxygenation device.

In one aspect, a still another further object of the present application is to simplify a structure of an electrolytic deoxygenation device and improve the structural integrity.

In one aspect, another further object of the present application is to improve the gas emission efficiency of each reaction space, and to avoid an excessive impact of a gas on each component of an electrolytic deoxygenation unit.

In another aspect, a further object of the present application is to ensure a service life of an electrolytic deoxygenation device while improving the deoxygenating efficiency.

In another aspect, another further object of the present application is to keep service lives of a plurality of electrolytic deoxygenation units consistent.

In another aspect, a yet another further object of the present application is to simplify a liquid replenishing process of the electrolytic deoxygenation device.

In another aspect, a still another further object of the present application is to enable an electrolytic deoxygenation device to treat a gas to be emitted to prevent environmental pollution.

In still another aspect, a further object of the present application is to enable a refrigerator to accurately calculate a liquid replenishing amount of the reaction space and achieve accurate liquid replenishing.

In still another aspect, a still another further object of the present application is to provide a novel method for detecting a deoxygenating rate.

In still another aspect, a yet another further object of the present application is to improve the control accuracy in a deoxygenating process, so as to not only ensure a deoxygenating effect, but also reduce the energy consumption.

According to one aspect of the present application, the present application provides an electrolytic deoxygenation device, comprising:
at least one electrolytic deoxygenation unit, configured to consume oxygen outside the electrolytic deoxygenation device by an electrochemical reaction under the action of an electrolytic voltage; and
a reaction container, wherein a liquid seal space and at least one reaction space are defined inside the reaction container, each reaction space is correspondingly equipped with one electrolytic deoxygenation unit, and the liquid seal space is configured to contain a liquid and is in gas path communication with the reaction space, so that a gas generated when the electrolytic deoxygenation unit performs the electrochemical reaction flows through the liquid contained in the liquid seal space, and specific substance components in the gas are dissolved in the liquid seal space.

Further, a transverse partition plate is arranged in the reaction container, and extends in a transverse direction to partition the liquid seal space and the reaction space which are arranged vertically; and
at least one exhaust port is formed in the transverse partition plate, and each exhaust port is correspondingly communicated with one reaction space, so that the liquid seal space is in gas path communication with the reaction space.

Further, at least one liquid replenishing port is further formed in the transverse partition plate, and each liquid replenishing port is correspondingly communicated with one reaction space, so that the liquid seal space is in liquid path communication with the reaction space; and
the liquid replenishing port is arranged higher than the exhaust port.

Further, the liquid replenishing port and the exhaust port are both hollow cylindrical gas nozzles, run through the transverse partition plate, and extend into the liquid seal space.

Further, a gas outlet is formed in a top wall of the liquid seal space, and is communicated with the liquid seal space to allow a filtered gas to be emitted.

Further, the electrolytic deoxygenation device further comprises:
a liquid replenishing container located above the reaction container, wherein a liquid storage space communicated with the liquid seal space is formed inside the liquid replenishing container, and is configured to replenish the liquid seal space with the liquid.

Further, a plurality of electrolytic deoxygenation units and a plurality of reaction spaces are provided; and
the plurality of reaction spaces is not communicated with each other, and is sequentially arranged in a horizontal direction.

Further, at least one longitudinal partition plate is arranged in the reaction container, and extends in a longitudinal direction to partition the plurality of reaction spaces sequentially arranged in the horizontal direction.

Further, the electrolytic deoxygenation unit comprises:
a cathode plate, configured to consume oxygen by an electrochemical reaction under the action of an electrolytic voltage, and provided with a cathode wiring terminal; and
an anode plate, configured to provide a reactant to the cathode plate and generate a gas by an electrochemical reaction under the action of an electrolytic voltage, and provided with an anode wiring terminal, wherein
the cathode wiring terminals and the anode wiring terminals of the adjacent electrolytic deoxygenation units are connected.

According to one aspect of the present application, the present application further provides an electrolytic deoxygenation device comprising:
a reaction container, wherein a plurality of reaction spaces for containing an electrolytic solution is defined inside the reaction container, and runs through each other to form a run-through channel for the electrolytic solutions to circulate; and
a plurality of electrolytic deoxygenation units arranged in one-to-one correspondence with the reaction spaces, wherein each electrolytic deoxygenation unit is assembled in one reaction space, and is configured to consume oxygen outside the reaction container by an electrochemical reaction under the action of an electrolytic voltage.

Further, the plurality of reaction spaces is sequentially arranged in a horizontal direction, and the adjacent reaction spaces are communicated with each other to form the run-through channel.

Further, at least one longitudinal partition plate is arranged in the reaction container, and extends in a longitudinal direction to partition the plurality of reaction spaces sequentially arranged in the horizontal direction; and a communication port is formed in the longitudinal partition plate, so that the adjacent reaction spaces are communicated with each other.

Further, treatment spaces are further defined inside the reaction container, located above the plurality of reaction spaces and in one-to-one communication with the reaction spaces, so as to allow a gas generated when each electrolytic deoxygenation unit performs the electrochemical reaction to flow therein; and
a gas outlet is formed in a top wall of each treatment space to allow the gas flowing into the treatment space to be emitted.

Further, a transverse partition plate is arranged in the reaction container, and extends in a transverse direction to partition the treatment spaces and the reaction spaces which are arranged vertically; and
a plurality of exhaust holes is formed in the transverse partition plate, and is in one-to-one communication with the reaction spaces.

Further, a liquid replenishing hole is further formed in the transverse partition plate, and is communicated with any one of the reaction spaces to allow a liquid flowing through the treatment space to flow into the reaction space.

Further, the liquid replenishing hole and the exhaust holes are both unthreaded holes running through a thickness direction of the transverse partition plate; and
a hole wall of the liquid replenishing hole extends upward, and an upper annular flange running through the liquid replenishing hole and the treatment spaces is formed on an upper surface of the transverse partition plate.

Further, the electrolytic deoxygenation device further comprises:
a liquid replenishing container located above the reaction container, wherein a liquid storage space communicated with the treatment spaces is formed inside the liquid replenishing container, and is configured to replenish the treatment spaces with the liquid.

Further, the electrolytic deoxygenation unit comprises:
a cathode plate, configured to consume oxygen by an electrochemical reaction under the action of an electrolytic voltage, and provided with a cathode wiring terminal; and
an anode plate, configured to provide a reactant to the cathode plate and generate a gas by an electrochemical reaction under the action of an electrolytic voltage, and provided with an anode wiring terminal, wherein
the cathode wiring terminals and the anode wiring terminals of the adjacent electrolytic deoxygenation units are connected.

According to one aspect of the present application, the present application further provides a refrigerator comprising the electrolytic deoxygenation device.

According to one aspect of the present application, the present application further provides a control method of a refrigerator, wherein the refrigerator comprises an electrolytic deoxygenation unit and a reaction container, the electrolytic deoxygenation unit is configured to perform an electrochemical reaction under the action of an electrolytic voltage to consume oxygen in a storing space of the refrigerator, and a reaction space and a filtering space are defined inside the reaction container; the reaction space is configured to be equipped with the electrolytic deoxygenation unit; the filtering space is configured to contain a liquid and filter a gas generated when the electrolytic deoxygenation unit performs the electrochemical reaction; and the control method comprises the following steps:
acquiring a liquid volume change value of the reaction space and a liquid volume change value of the filtering space, and recording the liquid volume change values as a first variable and a second variable, respectively;
determining a liquid replenishing amount of the reaction space based on the first variable and the second variable; and
replenishing the reaction space with the liquid based on the determined liquid replenishing amount.

Further, the filtering space filters the gas by dissolving specific substance components in the gas into the filtering space, and is in liquid path communication with the reaction space; and
the step of determining the liquid replenishing amount of the reaction space based on the first variable and the second variable comprises:
calculating a difference value between the first variable and the second variable;
calculating a liquid loss rate of the reaction space and the filtering space based on the difference value; and
determining the liquid replenishing amount of the reaction space based on the liquid loss rate.

Further, the filtering space is in liquid path communication with the reaction space through a liquid returning port, and a liquid inlet for receiving the liquid is formed in the filtering space; and
the step of replenishing the reaction space with the liquid based on the determined liquid replenishing amount comprises:
opening the liquid returning port and the liquid inlet, and detecting an amount of the liquid flowing through the liquid inlet; and
when the amount of the liquid cumulatively reaches the liquid replenishing amount, closing the liquid inlet, and closing the liquid returning port with a delay.

Further, the refrigerator further comprises a liquid replenishing container which is communicated with the liquid inlet and which is configured to supply a liquid to the filtering space; and
the step of replenishing the reaction space with the liquid based on the determined liquid replenishing amount before opening the liquid returning port and the liquid inlet comprises:
determining that a liquid storage amount of the liquid replenishing container is greater than or equal to the liquid replenishing amount.

Further, the step of replenishing the reaction space with the liquid based on the determined liquid replenishing amount before opening the liquid returning port and the liquid inlet comprises:
preheating the liquid replenishing container.

Further, while replenishing the reaction space with the liquid based on the determined liquid replenishing amount, the control method further comprises:
acquiring a flow rate of the liquid flowing through the liquid inlet;
judging whether the liquid flow rate exceeds a preset safety threshold; and
if yes, closing the liquid inlet, and sending out a prompt signal.

Further, a gas outlet communicated with an external environment is formed in the filtering space, and is configured to emit the filtered gas; and
after the step of replenishing the reaction space with the liquid based on the determined liquid replenishing amount, the method further comprises:
acquiring an exhaust rate of the filtering space;
calculating an electrochemical reaction rate of the electrolytic deoxygenation unit based on the exhaust rate and the liquid loss rate;
determining a working time of the electrolytic deoxygenation unit based on the electrochemical reaction rate; and
controlling the electrolytic deoxygenation unit based on the working time.

Further, the step of calculating the electrochemical reaction rate of the electrolytic deoxygenation unit based on the exhaust rate and the liquid loss rate comprises:
calculating a difference value between the exhaust rate and the liquid loss rate to obtain a gas generation rate of the electrolytic deoxygenation unit; and
determining the electrochemical reaction rate based on the gas generation rate.

Further, the step of determining the working time of the electrolytic deoxygenation unit based on the electrochemical reaction rate comprises:
acquiring an oxygen content of the storing space; and
calculating the working time of the electrolytic deoxygenation unit based on the electrochemical reaction rate and the oxygen content.

According to one aspect of the present application, the present application further provides a refrigerator comprising:
an electrolytic deoxygenation unit, configured to perform an electrochemical reaction under the action of an electrolytic voltage to consume oxygen in a storing space of the refrigerator;
a reaction container, wherein a reaction space and a filtering space are defined inside the reaction container, the reaction space is configured to be equipped with the electrolytic deoxygenation unit, and the filtering space is configured to contain a liquid and filter a gas generated when the electrolytic deoxygenation unit performs the electrochemical reaction; and
a processor and a memory, wherein a machine-executable program is stored in the memory, and the machine-executable program, when executed by the processor, causes the processor to implement the control method.

In one aspect, for an electrolytic deoxygenation device and a refrigerator having the same provided by the present application, since a liquid seal space and a reaction space are defined inside a reaction container, an electrolytic deoxygenation unit is assembled to the reaction space, and a gas generated when the electrolytic deoxygenation unit performs an electrochemical reaction can flow through a liquid contained in the liquid seal space, so that specific substance components in the gas are dissolved in the liquid seal space. Therefore, the present application provides an electrolytic deoxygenation device with a filtering function, which is beneficial to reducing or avoiding the environmental pollution caused by gas emissions.

Further, for the electrolytic deoxygenation device and the refrigerator having the same provided by the present application, since liquid path communication between the liquid seal space and the reaction space is achieved through a liquid replenishing port, the specific substance components dissolved in the liquid seal space can return to the reaction space again through the liquid replenishing port for recycling and reusing, which is beneficial to improving the resource utilization efficiency of the electrolytic deoxygenation device.

Further, for the electrolytic deoxygenation device and the refrigerator having the same provided by the present application, since the reaction space and the liquid seal space are both integrated in the reaction container, gas path communication and the liquid path communication between the reaction space and the liquid seal space can be achieved by forming an opening in a transverse partition plate, so as to achieve a filtering function and a recycling function. Therefore, the electrolytic deoxygenation device provided by the present application has the advantages of a simple structure and high degree of integration.

Further, for the electrolytic deoxygenation device and the refrigerator having the same provided by the present application, all reaction spaces are not communicated with each other, which means that the reaction spaces are disposed independently and do not interfere with each other. Therefore, the gas generated in each reaction space can only be emitted to the liquid seal space through an exhaust port, and thus can be prevented from entering other reaction spaces, which is beneficial to improving the gas emission efficiency of each reaction space and preventing the gas from generating an excessive impact on each component of the electrolytic deoxygenation unit.

In another aspect, for the electrolytic deoxygenation device and the refrigerator having the same provided by the present application, since the plurality of electrolytic deoxygenation units is provided and each electrolytic deoxygenation unit can consume oxygen by the electrochemical reaction under the action of an electrolytic voltage, when the electrochemical reactions are carried out simultaneously using the plurality of electrolytic deoxygenation units, each electrolytic deoxygenation unit can have higher deoxygenating efficiency by only working under a lower electrolytic voltage. Therefore, the electrolytic deoxygenation device provided by the present application ensures its service life while improving the deoxygenating efficiency.

Further, for the electrolytic deoxygenation device and the refrigerator having the same provided by the present application, each electrolytic deoxygenation unit is arranged in one reaction space, all the reaction spaces run through each other to form a run-through channel for the electrolytic solution to circulate, the electrolytic solution can freely flow in the plurality of reaction spaces, and the electrolytic solution in all the reaction spaces is basically homogeneous, which is beneficial to ensuring that electrochemical reaction rates of all the electrolytic deoxygenation units are consistent. Therefore, it is ensured that the service lives of the plurality of electrolytic deoxygenation units are consistent.

Further, for the electrolytic deoxygenation device and the refrigerator having the same provided by the present application, the plurality of reaction spaces runs through each other, and a treatment space is arranged above the reaction spaces, so that a liquid flowing through the treatment space flows into any one of the reaction spaces through a liquid replenishing hole, and the liquid flowing into this reaction space can be evenly distributed to other reaction spaces. In this way, liquid replenishing is completed, which is beneficial to simplifying the liquid replenishing process of the electrolytic deoxygenation device.

Furthermore, for the electrolytic deoxygenation device and the refrigerator having the same provided by the present application, since a hole wall of the liquid replenishing hole extends upward to form an upper annular flange which is arranged higher than the exhaust hole, when the reaction space is replenished with the liquid by using the treatment space, it is required that a liquid level of the treatment space is higher than the upper annular flange. Thus, the liquid in the treatment space can play a role of liquid sealing of the exhaust hole, and the gas flowing out of the exhaust hole needs to flow through the liquid in the treatment space and then flow out of the treatment space. The liquid carried by the gas can be dissolved in the treatment space when the gas flows through the liquid in the treatment space, which can reduce or avoid the environmental pollution caused by gas emissions.

In still another aspect, for the refrigerator and the control method thereof provided by the present application, a liquid replenishing amount of the reaction space is obtained by analyzing a liquid volume change value of the reaction space and a liquid volume change value of a filtering space, and the reaction space is replenished with the liquid based on the liquid replenishing amount, so that the refrigerator can achieve accurate liquid replenishing based on the accurately calculated liquid replenishing amount of the reaction space; and a liquid replenishing process is more intelligent, which avoids manual monitoring of the liquid replenishing amount in the liquid replenishing process.

Further, for the refrigerator and the control method thereof provided by the present application, an electrochemical reaction rate of the electrolytic deoxygenation unit can be calculated based on an exhaust rate of the filtering space and liquid loss rates of the reaction space and the filtering space, and is a deoxygenating rate of the electrolytic deoxygenation unit for a storing space. Therefore, a scheme of the present application provides a novel method for detecting a deoxygenating rate.

Further, for the refrigerator and the control method thereof provided by the present application, a working time of the electrolytic deoxygenation unit can be determined based on the electrochemical reaction rate, and the electrolytic deoxygenation unit can be controlled based on the working time. Therefore, the scheme of the present application is beneficial to improving the control accuracy of the deoxygenating process, thereby not only ensuring a deoxygenating effect, but also reducing the energy consumption.

The above and other objects, advantages and features of the present application will become more apparent to those skilled in the art from the following detailed description of specific embodiments thereof taken in conjunction with the accompanying drawings.

### BRIEF DESCRIPTION OF DRAWINGS

Some specific embodiments of the application will be described in detail hereinafter by way of example and not by way of limitation with reference to the accompanying drawings. The same reference numerals identify the same or similar components or parts in the drawings. Those skilled in the art should appreciate that the drawings are not necessarily drawn to scale. In the drawings:
FIG. 1 is a schematic structural diagram of an electrolytic deoxygenation device according to an embodiment of the present application;
FIG. 2 is a schematic top view of the electrolytic deoxygenation device shown in FIG. 1;
FIG. 3 is a schematic structural diagram of an electrolytic deoxygenation device according to another embodiment of the present application;
FIG. 4 is a schematic structural diagram of an electrolytic deoxygenation device according to still another embodiment of the present application;
FIG. 5 is a schematic top view of the electrolytic deoxygenation device shown in FIG. 4;
FIG. 6 is a schematic structural diagram of an electrolytic deoxygenation device according to yet another embodiment of the present application;
FIG. 7 is a schematic structural diagram of a refrigerator according to an embodiment of the present application;
FIG. 8 is a schematic structural diagram of a refrigerator according to another embodiment of the present application;
FIG. 9 is a schematic block diagram of a refrigerator according to an embodiment of the present application;
FIG. 10 is a schematic structural diagram of an electrolytic deoxygenation device of a refrigerator according to an embodiment of the present application;
FIG. 11 is a schematic diagram of a control method of a refrigerator according to an embodiment of the present application; and
FIG. 12 is a control flow chart according to an embodiment of the present application.

### DETAILED DESCRIPTION OF EMBODIMENTS

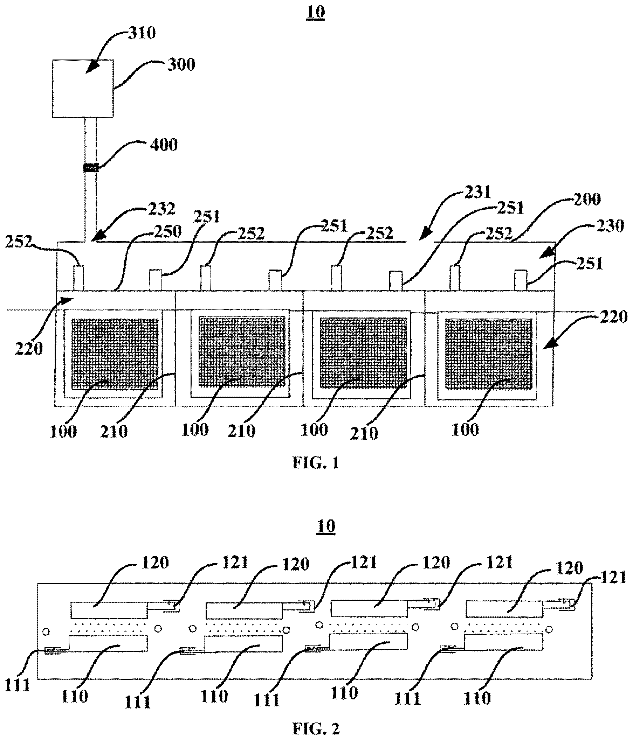

FIG. 1 is a schematic structural diagram of an electrolytic deoxygenation device 10 according to an embodiment of the present application. The electrolytic deoxygenation device 10 according to the present embodiment is mounted in a refrigerator 1 to consume oxygen in a storing space of the refrigerator 1.

The electrolytic deoxygenation device 10 can generally include a reaction container 200 and at least one electrolytic deoxygenation unit 100.

A liquid seal space 230 and at least one reaction space 220 are defined in the reaction container 200. Each reaction space 220 is correspondingly equipped with one electrolytic deoxygenation unit 100. In the present embodiment, the number of the reaction spaces 220 is the same as that of the electrolytic deoxygenation units 100, and the reaction spaces and the electrolytic deoxygenation units are arranged in one-to-one correspondence. Each reaction space 220 is equipped with one electrolytic deoxygenation unit 100.

The liquid seal space 230 is configured to contain a liquid and is in gas path communication with the reaction spaces 220, so that a gas generated when each electrolytic deoxygenation unit 100 performs an electrochemical reaction flows through the liquid contained in the liquid seal space 230, and specific substance components in the gas are dissolved in the liquid seal space 230. In other words, the gases emitted from the reaction spaces 220 are filtered when they flow through the liquid seal space 230, thereby purifying the gases. The specific substance components can refer to an electrolyte in an electrolytic solution carried by the gas.

Since the liquid seal space 230 and the reaction spaces 220 are defined inside the reaction container 200, the electrolytic deoxygenation units 100 are assembled to the reaction spaces 220, and the gases generated when the electrolytic deoxygenation units 100 perform the electrochemical reactions can flow through the liquid contained in the liquid seal space 230, such that the specific substance components in the gases can be dissolved in the liquid seal space 230. Therefore, the electrolytic deoxygenation device 10 provided by the present application has a filtering function, which is beneficial to reducing or avoiding the environmental pollution caused by gas emissions.

In the present embodiment, the liquid contained in the liquid seal space 230 can be water. In some optional embodiments, the liquid contained in the liquid seal space 230 can also be replaced by other solvents (e.g., a low-concentration NaOH aqueous solution) according to the solubility of an electrolytic solution carried by the gas.

The liquid seal space 230 and the reaction spaces 220 are integrated in the reaction container 200, so that the gases generated in the reaction spaces 220 flow through the liquid contained in the liquid seal space 230, and accordingly, are purified. The purification way is very ingenious and a filtering effect is better. Moreover, there is no need to mount a purifying mechanism outside the electrolytic deoxygenation device 10. Thus, the electrolytic deoxygenation device 10 according to the present embodiment has the advantages of a compact structure and high degree of integration.

In some optional embodiments, a transverse partition plate 250 is arranged in the reaction container 200, and extends in a transverse direction to partition the liquid seal space 230 and the reaction spaces 220 which are arranged vertically. That is, the liquid seal space 230 is arranged above the reaction spaces 220. For example, the transverse partition plate 250 can be flat or sheet-like, and a plate surface of the transverse partition plate can be parallel to a horizontal plane.

At least one exhaust port 251 is formed in the transverse partition plate 250. Each exhaust port 251 is correspondingly communicated with one reaction space 220, so that the liquid seal space 230 is in gas path communication with the reaction space 220. The gas generated in each reaction space 220 can flow into the liquid seal space 230 through the corresponding exhaust port 251. The number of the exhaust ports 251 is the same as that of the reaction spaces 220, and the exhaust ports and the reaction spaces are arranged in one-to-one correspondence, so that the gas generated in each reaction space 220 can flow into the liquid seal space 230 for filtering treatment.

In the electrolytic deoxygenation device 10 provided by the present embodiment, by forming the exhaust ports 251 in the transverse partition plate 250, the reaction spaces 220 can be in gas path communication with the liquid seal space 230, and the gases generated in the reaction spaces 220 can flow into the liquid seal space 230 for filtering treatment by virtue of upward movement of the gases themselves, without a need to mount other guiding mechanisms. Therefore, the electrolytic deoxygenation device has the advantages of a simple and exquisite structure.

In some embodiments, the transverse partition plate 250 can be formed inside the reaction container 200 by injection molding, which has a simple procedure, deletes a complex assembling process, and ensures the communication between the reaction spaces 220 and the liquid seal space 230.

An exhaust rate of the exhaust port 251 is greater than a maximum value of a gas generation rate of the electrolytic deoxygenation unit 100, so as to prevent the impact of a relatively higher atmospheric pressure formed in the reaction space 220 on each component of the electrolytic deoxygenation unit 100.

In some further embodiments, at least one liquid replenishing port 252 is further formed in the transverse partition plate 250. Each liquid replenishing port 252 is correspondingly communicated with one reaction space 220, so that the liquid seal space 230 is in liquid path communication with the reaction space 220. The liquid contained in the liquid seal space 230 can flow into the reaction space 220 through the liquid replenishing port 252, thereby replenishing the reaction space 220 with the liquid. The number of the liquid replenishing ports 252 is the same as that of the reaction spaces 220, and the liquid replenishing ports and the reaction spaces are arranged in one-to-one correspondence, so that each reaction space 220 can receive the liquid from the liquid seal space 230.

Since the liquid path communication between the liquid seal space 230 and the reaction spaces 220 is achieved through the liquid replenishing ports 252, the specific substance components dissolved in the liquid seal space 230 can return to the reaction spaces 220 again through the liquid replenishing ports 252 for recycling and reusing, which is beneficial to improving the resource utilization efficiency of the electrolytic deoxygenation device 10.

The liquid replenishing ports 252 are arranged higher than the exhaust ports 251, so that the liquid contained in the liquid seal space 230 can perform liquid sealing on the exhaust ports 251. In other words, when the liquid in the liquid seal space 230 can enter the reaction spaces 220 through the liquid replenishing ports 252, the liquid level in the liquid seal space 230 is higher than the exhaust ports 251, so that the exhaust ports 251 can be liquid-sealed.

Enabling the liquid contained in the liquid seal space 230 to perform the liquid sealing on the exhaust ports 251 can ensure that all the gases flowing out of the exhaust ports 251 flows through the liquid contained in the liquid seal space 230, so as to avoid the environmental pollution caused by direct emission of unfiltered gases. Meanwhile, the liquid in the liquid seal space 230 can further isolate the electrolytic solution in the reaction spaces 220 from the air, thereby reducing or avoiding the deterioration of the electrolytic solution.

In some optional embodiments, the liquid replenishing port 252 and the exhaust port 251 are both hollow cylindrical gas nozzles, run through the transverse partition plate 250, and extend into the liquid seal space 230. Since a wall of the hollow cylindrical gas nozzle can define a hollow cylindrical gas flow channel, extending the hollow cylindrical gas nozzle into the liquid seal space 230 can upward guide the gas flowing through the exhaust port 251, so that the gas filtering efficiency and the gas emission efficiency are improved.

A gas outlet 231 can be formed in a top wall of the liquid seal space 230, and is communicated with the liquid seal space 230 to allow the filtered gases to be emitted. In the present embodiment, the top wall of the liquid seal space 230 is also a top wall of the reaction container 200. The gases flowing into the liquid seal space 230 finally flow to the gas outlet 231 and is emitted to an external environment of the reaction container 200 through the gas outlet 231.

The liquid seal space 230 is used for collecting and filtering the gases generated by all the electrolytic deoxygenation units 100, and all the gases are uniformly emitted through the gas outlet 231. When the gases need to be guided by a gas duct, it is only necessary to communicate the gas duct with the gas outlet 231, which is simple in structure and easy to implement.

Since the reaction spaces 220 and the liquid seal space 230 are both integrated in the reaction container 200, the gas path communication and the liquid path communication between the reaction spaces 220 and the liquid seal space 230 can be achieved by forming an opening in the transverse partition plate 250, so as to achieve a filtering function and a recycling function. Therefore, the electrolytic deoxygenation device 10 provided by the present application has the advantages of a simple structure and high degree of integration.

In some optional embodiments, a plurality of electrolytic deoxygenation units 100 and a plurality of reaction spaces 220 are provided. Since the plurality of electrolytic deoxygenation units 100 is provided and each electrolytic deoxygenation unit 100 can consume oxygen by the electrochemical reaction under the action of an electrolytic voltage, when the electrochemical reactions are carried out simultaneously using the plurality of electrolytic deoxygenation units 100, each electrolytic deoxygenation unit 100 can have higher deoxygenating efficiency by only working under a lower electrolytic voltage. Therefore, the electrolytic deoxygenation device 10 provided by the present application ensures its service life while improving the deoxygenating efficiency.

FIG. 2 is a schematic top view of the electrolytic deoxygenation device 10 shown in FIG. 1, in which a plurality of reaction spaces 220 and a plurality of electrolytic deoxygenation units 100 are shown. The plurality of reaction spaces 220 is not communicated with each other, and is sequentially arranged in a horizontal direction.

All the reaction spaces 220 are not communicated with each other, which means that the reaction spaces 220 are disposed independently and do not interfere with each other. Therefore, the gas generated in each reaction space 220 can only be emitted to the liquid seal space 230 through the exhaust port 250, and is thus prevented from entering other reaction spaces 220, which is beneficial to improving the gas emission efficiency of each reaction space 220 and preventing the gas from generating an excessive impact on each component of the electrolytic deoxygenation unit 100.

Since the plurality of reaction spaces 220 is sequentially arranged in the horizontal direction and do not block each other, it can be ensured that each electrolytic deoxygenation unit 100 can be in smooth contact with oxygen outside the reaction container 200. Each electrolytic deoxygenation unit 100 has an equal chance of being in contact with oxygen, so that the electric energy efficiency of the whole electrolytic deoxygenation device 10 is higher.

At least one longitudinal partition plate 210 is arranged in the reaction container 200, and extends in a longitudinal direction respectively to partition the plurality of reaction spaces 220 sequentially arranged in the horizontal direction. The number of the longitudinal partition plates 210 is set according to the number of the reaction spaces 220, and is one less than the number of the reaction spaces 220. For example, the plurality of the longitudinal partition plates 210 can be flat or sheet-like, and arranged in parallel with each other; and a plate surface of each longitudinal partition plate 210 can be parallel to a vertical plane.

In some embodiments, the longitudinal partition plate 210 can be formed inside the reaction container 200 by injection molding, which has a simple procedure, deletes a complex assembling process, and ensures the communication between the adjacent reaction spaces 220.

In some optional embodiments, the electrolytic deoxygenation device 10 further includes a liquid replenishing container 300 located above the reaction container 200. A liquid storage space 310 communicated with the liquid seal space 230 is formed inside the liquid replenishing container 300 for replenishing the liquid seal space 230 with a liquid. For example, the liquid replenishing container 300 can be a water tank, and a liquid supplying port is formed in the bottom of the water tank. A liquid inlet 232 is correspondingly formed in the top wall of the liquid seal space 230, and is lower than the liquid supplying port; and the liquid supplying port and the liquid inlet 232 can be communicated by using a liquid transporting tube, so that the liquid flowing out of the liquid supplying port is guided to the liquid inlet 232 by the liquid transporting tube. A switch element 400 can be mounted in the liquid transporting tube, and is switched on and switched off controllably, so as to open and close a liquid path between the liquid supplying port and the liquid inlet 232.

In the electrolytic deoxygenation device 10 provided by the present embodiment, the electrolytic deoxygenation unit 100 consumes the electrolytic solution when performing the electrochemical reaction. By temporarily storing a certain amount of the liquid in the water tank, a liquid replenishing demand of the electrolytic deoxygenation unit 100 can be met within a certain range. Thus, a problem that the electrolytic deoxygenation unit 100 cannot work normally due to the insufficient electrolytic solution can be reduced or avoided, which is beneficial to improving the working performance of the electrolytic deoxygenation device 10.

The electrolytic deoxygenation unit 100 can generally include an anode plate 120 and a cathode plate 110.

The cathode plate 110 is configured to consume oxygen by the electrochemical reaction under the action of an electrolytic voltage. The anode plate 120 is configured to provide a reactant (e.g., electrons) to the cathode plate 110 and generate a gas by the electrochemical reaction under the action of an electrolytic voltage.

Under a power-on condition, for example, oxygen in air is subjected to a reduction reaction at the cathode plate 110, i.e., O₂+2H₂O+4e⁻→4OH⁻. OH- generated by the cathode plate 110 can be subjected to an oxidation reaction at the anode plate 120 and generates oxygen, i.e., 4OH→O₂+2H₂O+4e⁻.

The cathode plate 110 is provided with a cathode wiring terminal 111, and the anode plate 120 is provided with an anode wiring terminal 121. The cathode wiring terminals 111 and the anode wiring terminals 121 of the adjacent electrolytic deoxygenation units 100 are connected, so that the plurality of electrolytic deoxygenation units 100 can be sequentially connected in series. Since each electrolytic deoxygenation unit 100 can play a role in voltage division, it can avoid the increase of a loss rate of the electrolytic deoxygenation unit 100 caused by an excessive working current, which is beneficial to prolonging the service life of an electrochemical element.

In the present embodiment, since the electrochemical reaction of the electrolytic deoxygenation unit 100 consumes water, it is only required to replenish water to the reaction space 220; and the liquid in the water tank and the liquid in the liquid seal space 230 can be water, respectively.

The above examples of the electrochemical reactions of both the anode plate 120 and the cathode plate 110 are merely schematic, and based on the understanding the above embodiments, it should be easy for those skilled in the art to change the types of the electrochemical reactions or to expand the structure of the electrolytic deoxygenation device 10 with respect to its applicability to other types of electrochemical reactions, and these changes and expansions should all fall within the scope of protection of the present application.

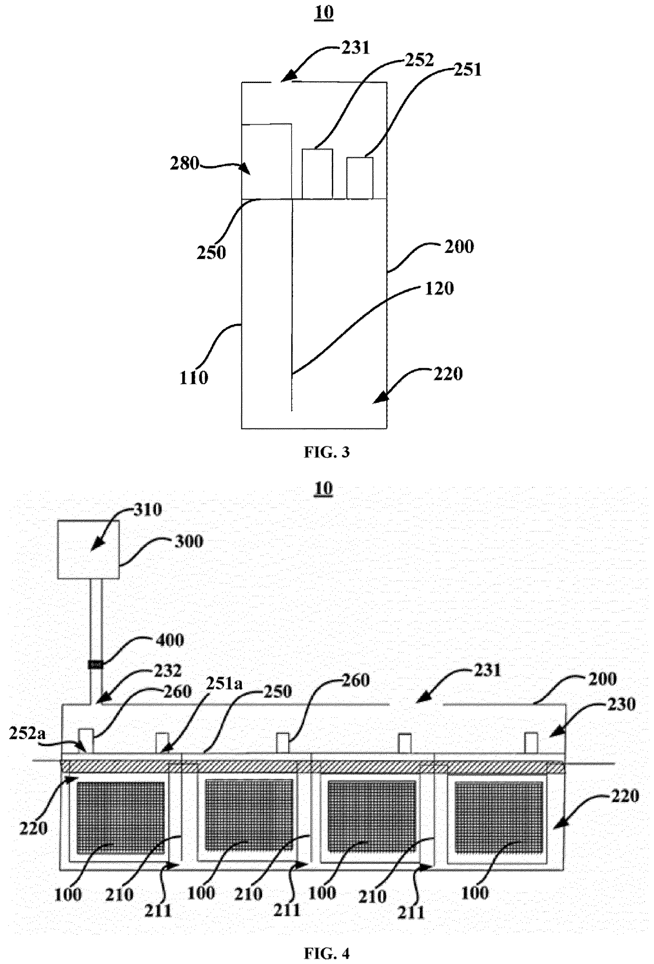

FIG. 3 is a schematic structural diagram (a side view) of an electrolytic deoxygenation device 10 according to another embodiment of the present application. In some embodiments, an opening is formed in a side wall of a reaction space 220 of a reaction container 200, and a cathode plate 110 can be arranged at the opening and defines the reaction space 220 for containing an electrolyte solution together with the reaction container 200. An anode plate 120 and the cathode plate 110 can be disposed in the reaction space 220 at an interval.

In some optional embodiments, at least a part of a front wall of the liquid seal space 230 is recessed backward to form a wiring bin 280. A cable can be arranged in the wiring bin 280, and is configured to connect the electrolytic deoxygenation unit 100 to a power supply of the electrolytic deoxygenation device 10, so that the power supply provides an electrolytic voltage to the electrolytic deoxygenation unit 100.

In other optional embodiments, the cathode plate 110 can be arranged inside the reaction container 200. For example, a plurality of holes is formed in a front wall of the reaction container 200 to allow the cathode plate 110 to be in contact with an external gas.

FIG. 4 is a schematic structural diagram of an electrolytic deoxygenation device 10 according to still another embodiment of the present application. The electrolytic deoxygenation device 10 in the present embodiment is mounted in a refrigerator 1 to consume oxygen in a storing space of the refrigerator 1.

The electrolytic deoxygenation device 10 can generally include a reaction container 200 and a plurality of electrolytic deoxygenation units 100.

A plurality of reaction spaces 220 for containing an electrolytic solution is defined inside the reaction container 200. The plurality of reaction spaces 220 runs through each other to form a run-through channel 221 for the electrolytic solution to circulate. In the present embodiment, all the reaction spaces 220 are in direct or indirect communication with each other, so as to form the run-through channel 221 for the electrolytic solution to circulate, and the electrolytic solution in all the reaction spaces 220 is homogeneous.

The plurality of electrolytic deoxygenation units 100 and the reaction spaces 220 are arranged in one-to-one correspondence, and each electrolytic deoxygenation unit 100 is assembled in one of the reaction spaces 220 to consume oxygen outside the reaction container 200 by an electrochemical reaction under the action of an electrolytic voltage. In the present embodiment, each electrolytic deoxygenation unit 100 can independently perform the electrochemical reaction. When the plurality of electrolytic deoxygenation units 100 simultaneously performs the electrochemical reactions, the deoxygenating efficiency of the electrolytic deoxygenation device 10 is accumulated.

For the electrolytic deoxygenation device 10 and the refrigerator 1 having the same provided by the present application, since the plurality of electrolytic deoxygenation units 100 is provided and each electrolytic deoxygenation unit 100 can consume oxygen by the electrochemical reaction under the action of the electrolytic voltage, when the electrochemical reactions are carried out simultaneously using the plurality of electrolytic deoxygenation units 100, each electrolytic deoxygenation unit 100 can have higher deoxygenating efficiency by only working under a lower electrolytic voltage. Therefore, the electrolytic deoxygenation device 10 provided by the present application ensures its service life while improving the deoxygenating efficiency, and is higher in safety.

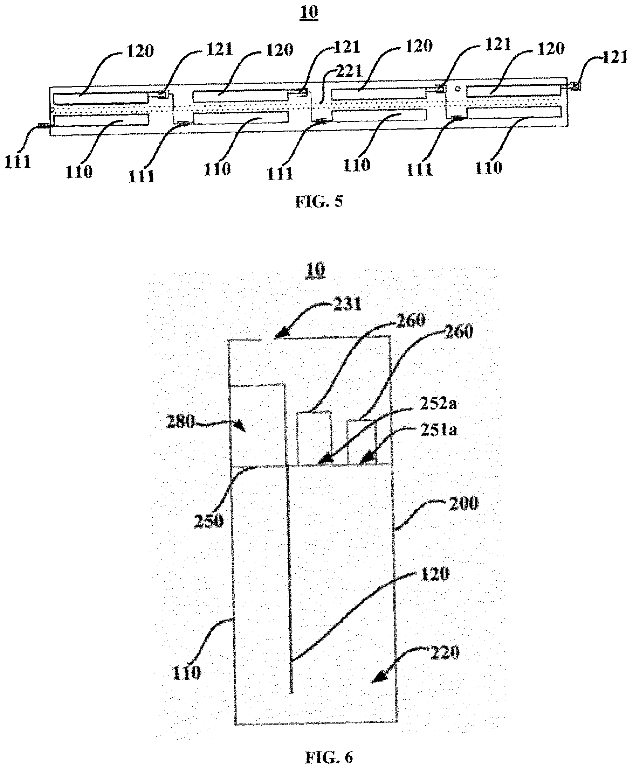

FIG. 5 is a schematic top view of the electrolytic deoxygenation device 10 shown in FIG. 4, in which reaction spaces 220 and electrolytic deoxygenation units 100 are shown. Since each electrolytic deoxygenation unit 100 is arranged in one reaction space 200, all the reaction spaces 220 run through each other to form a run-through channel 221 for the electrolytic solution to circulate (as shown by a dotted line in FIG. 2), the electrolytic solution can freely flow in the plurality of reaction spaces 220, and the electrolytic solution in all the reaction spaces 220 is basically homogeneous, which is beneficial to ensuring that electrochemical reaction rates of all the electrolytic deoxygenation units 100 are consistent. Therefore, it is ensured that the service lives of the plurality of electrolytic deoxygenation units 100 are consistent. When all the electrolytic deoxygenation units are aged, they can be replaced uniformly, which is beneficial to reducing the maintenance cost.

In some optional embodiments, the plurality of reaction spaces 220 is sequentially arranged in a horizontal direction, and the adjacent reaction spaces 220 are communicated with each other to form the run-through channel 221. In the present embodiment, by enabling the adjacent reaction spaces 220 to be in direct communication with each other, the reaction spaces 220 that are not directly communicated with each other can be indirectly communicated with each other, so that the plurality of reaction spaces 220 run through each other to form the run-through channel 221.

Sequentially arranging the plurality of reaction spaces 220 in the horizontal direction can ensure that all the reaction spaces 220 are of substantially the same height. Since the adjacent reaction spaces 220 are communicated with each other, all the reaction spaces 220 form a communication device by means of running through each other. Based on the structure of such a communication device, the electrolytic solution in all the reaction spaces 220 can be evenly distributed without external interference, and the electrolytic solution are of substantially the same liquid level and concentration.

Since the plurality of reaction spaces 220 is sequentially arranged in the horizontal direction and do not block each other, it can be ensured that each electrolytic deoxygenation unit 100 can be in smooth contact with oxygen outside the reaction container 200. Each electrolytic deoxygenation unit 100 has an equal chance of being in contact with oxygen.

In some optional embodiments, at least one longitudinal partition plate 210 is arranged in the reaction container 200, and extends in a longitudinal direction to partition the plurality of reaction spaces 220 sequentially arranged in the horizontal direction. The number of the longitudinal partition plates 210 is set according to the number of the reaction spaces 220, and is one less than the number of the reaction spaces 220. For example, the plurality of the longitudinal partition plates 210 can be flat or sheet-like, and arranged in parallel with each other; and a plate surface of each longitudinal partition plate 210 can be parallel to a vertical plane.

A communication port 211 is formed in the longitudinal partition plate 210, so that the adjacent reaction spaces 220 are communicated with each other. The electrolytic solution in a certain reaction space 220 can flow into other reaction spaces 220 through the communication port 211. In the electrolytic deoxygenation device 10 according to the present embodiment, all the reaction spaces 220 can run through each other by forming the communication port 211 in the longitudinal partition plate 210, which has the advantage of an exquisite structure. The communication port 211 can be located at a bottom section of the longitudinal partition plate 210.

In other embodiments, the longitudinal partition plate 210 can not be provided with the communication port 211. For example, a gap can be formed between the longitudinal partition plate 210 and the bottom wall of each reaction space 220, thereby forming the communication port 211.

In some embodiments, the longitudinal partition plate 210 can be formed inside the reaction container 200 by injection molding, which has a simple procedure, deletes a complex assembling process, and ensures the communication between the adjacent reaction spaces 220.

In some optional embodiments, treatment spaces 230 are further defined inside the reaction container 200, are located above the plurality of reaction spaces 220, and are in one-to-one communication with the reaction spaces 220, so as to allow the gas generated when each electrolytic deoxygenation unit 100 performs the electrochemical reaction to flow therein. That is, inside the reaction container 200 according to the present embodiment, the treatment spaces 230 are located in an upper space, and the reaction spaces 220 are located in a lower space. In some embodiments, the treatment space 230 can also have a liquid-sealed function, so it is also called the liquid seal space 230.

The gases generated when the electrolytic deoxygenation units 100 perform the electrochemical reactions are formed in their respective corresponding reaction spaces 220. Since the treatment spaces 230 are in one-to-one communication with the reaction spaces 220, the gas generated by each electrolytic deoxygenation unit 100 can flow into the corresponding treatment space 230.

A gas outlet 231 is formed in a top wall of the treatment space 230 to allow the gas flowing into the treatment space 230 to be emitted. In the present embodiment, the top wall of the treatment space 230 is also the top wall of the reaction container 200. The gas flowing into the treatment space 230 finally flows toward the gas outlet 231 and is emitted to the external environment of the reaction container 200 through the gas outlet 231.

The gases generated by all the electrolytic deoxygenation units 100 are collected by using the treatment spaces 230, and these gases are uniformly emitted through the gas outlets 231. When the gases need to be guided by a gas duct, it is only necessary to communicate the gas duct with the gas outlets 231, which is simple in structure and easy to implement.

In some optional embodiments, a transverse partition plate 250 is arranged in the reaction container 200, and extends in a transverse direction to partition the treatment space 230 and the reaction space 220 which are arranged vertically. In the present embodiment, there is one transverse partition plate 250. For example, the transverse partition plate 250 can be flat or sheet-like, and a plate surface of the transverse partition plate can be parallel to a horizontal plane.

A plurality of exhaust holes 251a is formed in the transverse partition plate 250, and is in one-to-one communication with the reaction spaces 220. In the electrolytic deoxygenation device 10 according to the present embodiment, by forming the exhaust holes 251a in the transverse partition plate 250, the reaction spaces 220 and the treatment spaces 230 can be communicated, achieving the advantage of an exquisite structure. Since both the treatment spaces 230 and the reaction spaces 220 are integrated in the reaction container 200 and partitioned by the transverse partition plate 250 having the exhaust holes 251a, a gas guide structure is deleted and the gas tightness is ensured.

An exhaust rate of the exhaust hole 251a is greater than a maximum value of a gas generation rate of the electrolytic deoxygenation unit 100, so as to prevent the impact of a relatively higher atmospheric pressure formed in the reaction space 220 on each component of the electrolytic deoxygenation unit 100.

In some embodiments, the transverse partition plate 250 can be formed inside the reaction container 200 by injection molding, which has a simple procedure, deletes a complex assembling process, and ensures the communication between the reactions.

In some further embodiments, a liquid replenishing hole 252a is further formed in the transverse partition plate 250 to allow a liquid flowing through the treatment space 230 to flow into the reaction space 220. In other words, the treatment space 230 according to the present embodiment can be used as not only a gas collection bin for collecting the gas but also a liquid supplying bin for supplying the liquid to the reaction space 220. After flowing through the treatment space 230, the liquid from the outside of the treatment space 230 can flow into the reaction space 220 from the liquid replenishing hole 252a.

The number of the liquid replenishing hole 252a is one, and the liquid replenishing hole 252a can be communicated with any reaction space 220. Since the plurality of reaction spaces 220 runs through each other, the treatment spaces 230 are provided above the reaction spaces 220, and the liquid flowing through the treatment spaces 230 is enabled to flow into any reaction space 220 through the liquid replenishing hole 252a, the liquid flowing into any reaction space 220 can be evenly distributed to other reaction spaces 220 to complete liquid replenishing, which is conductive to simplifying the liquid replenishing process of the electrolytic deoxygenation device 10.

In some embodiments, a plurality of liquid replenishing holes 252a can also be provided according to actual needs, which can improve the liquid replenishing efficiency and enable the electrolytic solution in all the reaction spaces 220 to be homogeneous at a faster speed.

In some optional embodiments, the liquid replenishing hole 252a and the exhaust hole 251a are both unthreaded holes that run through a thickness direction of the transverse partition plate 250. For example, the liquid replenishing hole 252a can be communicated with the reaction space 220 at an end part of the reaction container 200. The exhaust hole 251a can be provided close to the anode plate 120 of the electrolytic deoxygenation unit 100 and away from the cathode plate 110 of the electrolytic deoxygenation unit 100, thereby ensuring the gas emission efficiency of the reaction space 220.

A hole wall of the liquid replenishing hole 252a extends upward, and an upper annular flange 260 running through the liquid replenishing hole 252a and the treatment space 230 is formed on an upper surface of the transverse partition plate 250. In other words, the upper annular flange 260 is in a hollow cylindrical shape, and the cylindrical wall thereof encloses a hollow channel communicated with the liquid replenishing hole 252a. In this way, the liquid replenishing hole 252a and the upper annular flange 260 together form a hollow cylindrical gas nozzle. The liquid in the treatment space 230 needs to flow through the hollow channel of the upper annular flange 260, then flow through the liquid replenishing hole 252a, and finally flow into the reaction space 220.

Since the hole wall of the liquid replenishing hole 252a extends upward to form the upper annular flange 260 which is higher than the exhaust hole 251a, when the reaction space 220 is replenished with the liquid by using the treatment space 230, it is required that the liquid level of the treatment space 230 is higher than the upper annular flange 260. Thus, the liquid in the treatment space 230 can play a role of liquid sealing of the exhaust hole 251a, and the gas flowing out of the exhaust hole 251a needs to flow through the liquid in the treatment space 230 and then flow out of the treatment space 230. The liquid (for example, the electrolytic solution) carried by the gas can be dissolved in the treatment space 230 when the gas flows through the liquid in the treatment space 230, which can reduce or avoid the environmental pollution caused by gas emissions.

Meanwhile, a substance ingredient dissolved in the treatment space 230 can return to the reaction space 220 from the liquid replenishing hole 252a for recycling and reusing. Therefore, the electrolytic deoxygenation device 10 according to the present embodiment has filtering and recycling functions, which improves the resource utilization efficiency and reduces or avoids electrolyte waste caused by direct gas emissions.

The liquid in the treatment space 230 can also isolate the electrolytic solution in the reaction space 220 from air, thereby reducing or avoiding the deterioration of the electrolytic solution.

In some optional embodiments, a hole wall of the exhaust hole 251a can also extend upward, and another upper annular flange 260 running through the exhaust hole 251a and the treatment space 230 is formed on the upper surface of the transverse partition plate 250 and can be named a second upper annular flange 260. The exhaust hole 251a and the second upper annular flange 260 together form a hollow cylindrical air nozzle. The upper annular flange 260 running through the liquid replenishing hole 252a and the treatment space 230 can be named a first upper annular flange 260. The first upper annular flange 260 is higher than the second upper annular flange 260 to ensure that the liquid in the treatment space 230 can perform liquid sealing on the exhaust hole 251a.

Since an airflow channel extending from bottom to top is defined inside the second upper annular flange 260, an airflow flowing through the airflow channel can be guided upward, which is conductive to improving the gas emission efficiency.

In some optional embodiments, the electrolytic deoxygenation device 10 further includes a liquid replenishing container 300 located above the reaction container 200. A liquid storage space 310 communicated with the treatment space 230 is formed inside the liquid replenishing container 300 for replenishing the treatment space 230 with a liquid. For example, the liquid replenishing container 300 can be a water tank, and a liquid supplying port is formed in the bottom of the water tank. A liquid inlet 232 is correspondingly formed in the top wall of the treatment space 230, and is lower than the liquid supplying port; and the liquid supplying port and the liquid inlet 232 can be communicated by using a liquid transporting tube, so that the liquid flowing out of the liquid supplying port is guided to the liquid inlet 232 by the liquid transporting tube. A switch element 400 can be mounted in the liquid transporting tube, and can be switched on and switched off controllably, so as to open and close a liquid path between the liquid supplying port and the liquid inlet 232.

In the electrolytic deoxygenation device 10 according to the present embodiment, the electrolytic deoxygenation unit 100 consumes the electrolytic solution when performing the electrochemical reaction. By temporarily storing a certain amount of the liquid in the water tank, a liquid replenishing demand of the electrolytic deoxygenation unit 100 can be met within a certain range. Thus, a problem that the electrolytic deoxygenation unit 100 cannot work normally due to the insufficient electrolytic solution can be reduced or avoided, which is beneficial to improving a working performance of the electrolytic deoxygenation device 10.

The structure of the electrolytic deoxygenation unit 100 is as described above and is not repeated.

In the present embodiment, since the electrochemical reaction of the electrolytic deoxygenation unit 100 consumes water, it is only required to replenish water to the reaction space 220; and the liquid in the water tank and the liquid in the treatment space 230 can be water, respectively.

The above examples of the electrochemical reactions of both the anode plate 120 and the cathode plate 110 are merely schematic, and based on the understanding the above embodiments, it should be easy for those skilled in the art to change the types of the electrochemical reactions or to expand the structure of the electrolytic deoxygenation device 10 with respect to its applicability to other types of electrochemical reactions, and these changes and expansions should all fall within the scope of protection of the present application.

FIG. 6 is a schematic structural diagram (a side view) of an electrolytic deoxygenation device 10 according to yet another embodiment of the present application. In some embodiments, an opening is formed in a side wall of a reaction space 220 of a reaction container 200, and a cathode plate 110 can be arranged at the opening and define the reaction space 220 for containing an electrolyte solution together with the reaction container 200. An anode plate 120 and the cathode plate 110 can be disposed in the reaction space 220 at an interval.

In some optional embodiments, at least a part of a front wall of the treatment space 230 is recessed backward to form a wiring bin 280. A cable can be arranged in the wiring bin 280, and is configured to connect the electrolytic deoxygenation unit 100 to a power supply of the electrolytic deoxygenation device 10, so that the power supply provides an electrolytic voltage to the electrolytic deoxygenation unit 100.

In other optional embodiments, the cathode plate 110 can be arranged inside the reaction container 200. For example, a plurality of holes can be formed in a front wall of the reaction container 200 to allow the cathode plate 110 to be in contact with an external gas.

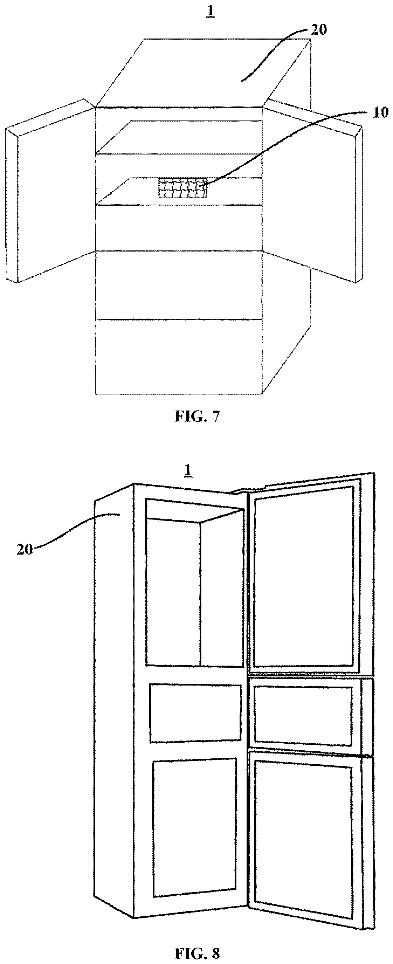

FIG. 7 is a schematic structural diagram of a refrigerator 1 according to an embodiment of the present application. FIG. 8 is a schematic structural diagram of a refrigerator 1 according to another embodiment of the present application. The refrigerator 1 can generally include a box body 20 and the electrolytic deoxygenation device 10 as described in any of the above embodiments. A storing space is defined inside the box body 20. The electrolytic deoxygenation device 10 is mounted in the box body 20 and configured to consume oxygen in the storing space. For example, the cathode plate can be in airflow communication with the storing space.

In the present embodiment of the present application, the refrigerator 1 is an electrical apparatus having a low-temperature storage function, and includes not only refrigerators in a narrow sense, but also freezers, storage cabinets and other refrigerating and freezing devices.

In other embodiments, the electrolytic deoxygenation device 10 can also provide oxygen to the storing space, so that the storing space can create a high-oxygen fresh-keeping atmosphere. For example, a gas outlet of the electrolytic deoxygenation device can be in airflow communication with the storing space.

In one aspect, for the electrolytic deoxygenation device 10 and the refrigerator 1 having the same provided by the present application, since a liquid seal space 230 and reaction spaces 220 are defined inside the reaction container 200, an electrolytic deoxygenation unit 100 is assembled to each of the reaction space 220, and a gas generated when the electrolytic deoxygenation unit 100 performs an electrochemical reaction can flow through a liquid contained in the liquid seal space 230, so that specific substance components in the gas are dissolved in the liquid seal space 230. Therefore, the present application provides an electrolytic deoxygenation device 10 with a filtering function, which is beneficial to reducing or avoiding the environmental pollution caused by gas emissions.

In another aspect, for the electrolytic deoxygenation device 10 and the refrigerator 1 having the same provided by the present application, since the plurality of electrolytic deoxygenation units 100 is provided and each electrolytic deoxygenation unit 100 can consume oxygen by the electrochemical reaction under the action of an electrolytic voltage, when the electrochemical reactions are carried out simultaneously using the plurality of electrolytic deoxygenation units 100, each electrolytic deoxygenation unit 100 can have higher deoxygenating efficiency by only working under a lower electrolytic voltage. Therefore, the electrolytic deoxygenation device 10 provided by the present application ensures its service life while improving the deoxygenating efficiency, and is higher in safety.

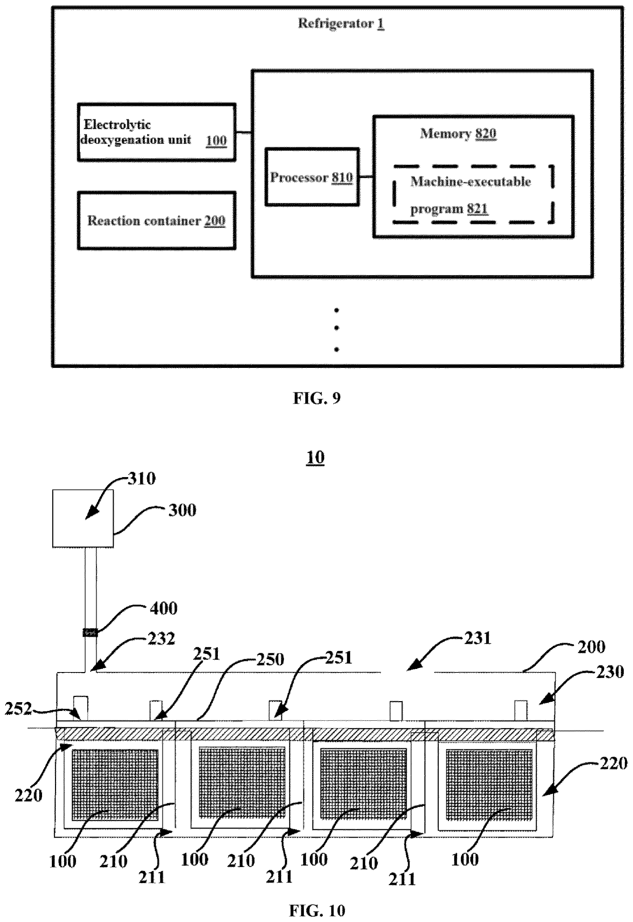

FIG. 9 is a schematic block diagram of a refrigerator 1 according to an embodiment of the present application.

The refrigerator 1 can generally include an electrolytic deoxygenation unit 100, a reaction container 200, a processor 810 and a memory 820, and can further include a box body. The electrolytic deoxygenation unit 100, the reaction container 200, the processor 810 and the memory 820 are all arranged in the box body. The electrolytic deoxygenation unit 100 and the reaction container 200 can form the electrolytic deoxygenation device 10.

A storing space is formed inside the box body. The number of the storing spaces can be set to one or more according to actual needs.

The electrolytic deoxygenation unit 100 is configured to perform an electrochemical reaction under the action of an electrolytic voltage to consume oxygen in the storing space of the refrigerator 1.

The electrolytic deoxygenation unit 100 can not only deoxygenate one storing space 21 exclusively, but also deoxygenate the plurality of storing spaces 21 simultaneously, as long as airflow communication between the electrolytic deoxygenation unit 100 and the storing space 21 to be deoxygenated is guaranteed. The airflow communication means that air in the storing space 21 can flow to the electrolytic deoxygenation unit 100, for example, flow to a cathode plate of the electrolytic deoxygenation unit 100, so that the cathode plate performs the electrochemical reaction by taking oxygen in the air as a reactant, thereby playing the role of deoxygenation. The following embodiments will be illustrated in the case where a plurality of electrolytic deoxygenation units 100 is dedicated to deoxygenating one storing space. It should be easy for those skilled in the art to make expansions according to the following embodiments, so no other examples will be given.

The electrolytic deoxygenation unit 100 can generally include an anode plate and a cathode plate. The cathode plate is configured to consume oxygen by an electrochemical reaction under the action of an electrolytic voltage. The anode plate is configured to provide a reactant (e.g., electrons) to the cathode plate and generate a gas by an electrochemical reaction under the action of an electrolytic voltage. Under a power-on condition, for example, oxygen in air is subjected to a reduction reaction at the cathode plate, i.e., O₂+2H₂O+4e⁻→4OH⁻. OH⁻ generated by the cathode plate can be subjected to an oxidation reaction at the anode plate and generates oxygen, i.e., 40H⁻→O₂+2H₂O+4e⁻.

The cathode plate is provided with a cathode wiring terminal, and the anode plate is provided with an anode wiring terminal. In the case of a plurality of electrolytic deoxygenation units 100, the cathode wiring terminals and the anode wiring terminals of the adjacent electrolytic deoxygenation units 100 are connected, so that the plurality of electrolytic deoxygenation units 100 can be sequentially connected in series. Since each electrolytic deoxygenation unit 100 can play a role in voltage division, it can avoid the increase in a loss rate of the electrolytic oxygenating unit 100 due to an excessive working current, which is beneficial to prolonging the service life of an electrochemical element.

In some embodiments, the refrigerator 1 can further include a power supply configured to provide the electrolytic deoxygenation unit 100 with an electrolytic voltage required for the electrochemical reaction.

The number of the electrolytic deoxygenation units 100 according to the present embodiment can be set to one or more according to actual needs. In the case of a plurality of electrolytic deoxygenation units 100, the plurality of electrolytic deoxygenation units 100 can be connected in series with each other and synchronously start the electrochemical reactions. FIG. 10 is a schematic structural diagram of an electrolytic deoxygenation device 10 of a refrigerator 1 according to an embodiment of the present application.

Reaction spaces 220 and a filtering space 230 are defined inside a reaction container 200. The reaction spaces 220 are configured to be equipped with the electrolytic deoxygenation units 100. The filtering space 230 is configured to contain a liquid and filter gases generated when the electrolytic deoxygenation units 100 perform electrochemical reactions. The reaction spaces 220 can be in air path communication with the filtering space 230, and the gases generated in the reaction spaces 220 flow into the filtering space 230 and flow through the liquid contained in the filtering space 230 to enable specific substance components (such as electrolytes in the electrolytic solution) carried by the gases to be dissolved in the liquid contained in the filtering space 230, so that the filtering space 230 achieves a gas filtering function. In some embodiments, the filtering space 230 can also play a liquid-sealed role, so it is also called the liquid seal space 230.

For example, a transverse partition plate 250 is arranged in the reaction container 200, and extends in a transverse direction to partition the filtering space 230 and the reaction spaces 220 which are arranged vertically. The filtering space 230 is arranged above the reaction spaces 220. Exhaust ports 251 are formed in the transverse partition plate 250, so that the filtering space 230 and the reaction spaces 220 are in air path communication with each other through the exhaust ports 251. A liquid returning port (also called a liquid replenishing port) 252 is further formed in the transverse partition plate 250, so that the filtering space 230 and the reaction space 220 are in liquid path communication with each other through the liquid returning port 252. The liquid in the filtering space 230 can flow into the reaction spaces 220 through the liquid returning port 252 to replenish the reaction spaces 220 with the liquid.

The liquid returning port 252 and the exhaust ports 251 are both hollow cylindrical gas nozzles, run through the transverse partition plate 250, and extend into the filtering space 230. The liquid returning port 252 is arranged higher than the exhaust ports 251, so that the liquid contained in the filtering space 230 can perform liquid sealing on the exhaust ports 251. In other words, when the liquid in the filtering space 230 can enter the reaction spaces 220 through the liquid returning port 252, the liquid level in the filtering space 230 is higher than the exhaust ports 251, so that the exhaust ports 251 can be liquid-sealed. Under normal conditions, the liquid level in the filtering space is higher than the liquid returning port.

Enabling the liquid contained in the filtering space 230 to perform the liquid sealing on the exhaust ports 251 can ensure that all of gases flowing out of the exhaust ports 251 can flow through the liquid contained in the filtering space 230, so as to avoid the environmental pollution caused by direct emission of unfiltered gases. Meanwhile, the liquid in the filtering space 230 can further isolate the electrolytic solution in the reaction spaces 220 from the air, thereby reducing or avoiding the deterioration of the electrolytic solution.

A gas outlet 231 can be formed in the top wall of the filtering space 230, and is communicated with the filtering space 230 to allow the filtered gas to be emitted. In the present embodiment, the top wall of the filtering space 230 is also the top wall of the reaction container 200. The gases flowing into the filtering space 230 finally flow toward the gas outlet 231 and are emitted to the external environment of the reaction container 200 through the gas outlet 231.

The processor 810 and the memory 820 are configured to form a control device of the refrigerator 10, and the control device can be a main control panel of the refrigerator 10. The memory 820 stores a machine-executable program 821 therein, and the machine-executable program 821, when executed by the processor 810, causes the processor to implement the control method of the refrigerator 10 according to any of the following embodiments. The processor 810 can be a central processing unit (CPU), a digital processing unit (DSP), or the like. The memory 820 is configured to store a program executed by the processor 810. The memory 820 can be any medium that can be configured to carry or store an expected program code in the form of an instruction or a data structure and can be accessed by a computer, but is not limited thereto. The memory 820 can also be a combination of various memories 820. The machine-executable program 821, when executed by the processor 810, causes the processor to implement the processes of the following method embodiments and can achieve the same technical effect, which will not be repeated herein to avoid repetition.

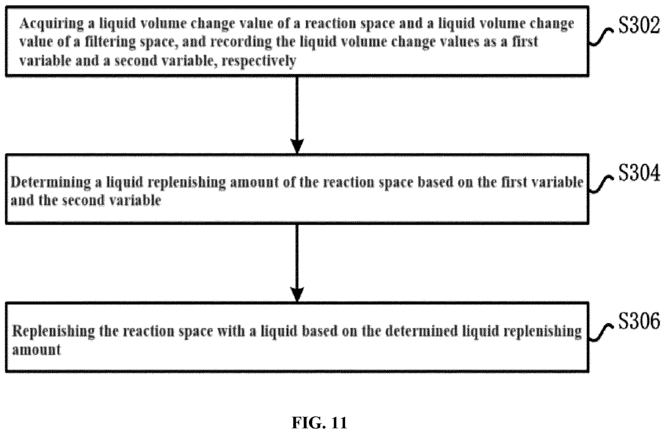

FIG. 11 is a schematic diagram of a control method of a refrigerator 1 according to an embodiment of the present application. The control method can generally include the following steps.

In S302, a liquid volume change value of a reaction space 220 and a liquid volume change value of a filtering space 230 are acquired and recorded as a first variable and a second variable, respectively. In the present embodiment, both the liquid volume change value of the reaction space 220 and the liquid volume change value of the filtering space 230 are relative to an electrochemical reaction process, and for example, can be liquid volume change values when an electrolytic deoxygenation unit 100 performs an electrochemical reaction within a set time period. Each of the reaction space 220 and the filtering space 230 can be provided with a liquid level sensor, and the liquid volume change values of the reaction space and the filtering space are determined based on values detected by the liquid level sensors.

In S304, a liquid replenishing amount of the reaction space 220 is determined based on the first variable and the second variable. The liquid replenishing amount of the reaction space 220 is configured to characterize the amount of the liquid needed to be added to the reaction space 220.

In S306, the reaction space 220 is replenished with the liquid based on the determined liquid replenishing amount. By replenishing the reaction space 220 with the liquid based on the determined liquid replenishing amount, the liquid lost in the electrochemical reaction can be compensated, and the amount of the liquid in the reaction space 220 can be restored to its initial liquid level before the electrochemical reaction.

For the control method of the refrigerator 1 provided by the present application, the liquid replenishing amount of the reaction space 220 is obtained by analyzing the liquid volume change value of the reaction space 220 and the liquid volume change value of the filtering space 230, and the reaction space 230 is replenished with the liquid based on the liquid replenishing amount, so that the refrigerator 1 can achieve accurate liquid replenishing based on the accurately calculated liquid replenishing amount of the reaction space 220; and a liquid replenishing process is more intelligent, which avoids manual monitoring of the liquid replenishing amount in the liquid replenishing process.

In some optional embodiments, the filtering space 230 filters the gas by dissolving specific substance components in the gas into the filtering space 230. The filtering space 230 is in liquid path communication with the reaction space 220 for replenishing the reaction space 220 with the liquid. For example, when replenishing the reaction space 220 with the liquid, the liquid can be directly replenished to the filtering space 230, and then, the liquid flowing into the filtering space 230 flows into the reaction space 220 through a liquid path communication port 211 between the filtering space 230 and the reaction space 220. It should be noted that, since the filtering space 230 is in liquid path communication with the reaction space 220, the specific substance components retained in the filtering space 230 due to filtering can return to the reaction space 220 again.

The step of determining the liquid replenishing amount of the reaction space 220 based on the first variable and the second variable includes: calculating a difference value between the first variable and the second variable, calculating a liquid loss rate of the reaction space 220 and the filtering space 230 based on the difference value, and determining the liquid replenishing amount of the reaction space 220 based on the liquid loss rate.

The first variable and the second variable are positive numbers, respectively. Since the specific substance components retained in the filtering space 230 can return to the reaction space 220 again, the difference value between the first variable and the second variable reflects the amount of liquid that is not filtered and emitted to the external space along with the gas, and this amount of the liquid is an actual liquid loss amount of the reaction space 220, namely, a liquid loss amount of the reaction space 220 and the filtering space 230. A ratio of the liquid loss amount to a time length of the set time period is the liquid loss rate. In the step of determining the liquid replenishing amount of the reaction space 220 based on the liquid loss rate, the liquid replenishing amount of the reaction space 220 can be determined based on the liquid loss rate and an accumulated time length of the actually occurring electrochemical reaction. In the present embodiment, the step of replenishing the reaction space 220 with the liquid can be performed during the electrochemical reaction of the electrolytic deoxygenation unit 100, and for example, one liquid replenishing operation can be performed every preset time interval.

In some optional embodiments, the filtering space 230 and the reaction space 220 are in liquid path communication with each other through a liquid returning port 252. A liquid inlet 232 for receiving a liquid is formed in the filtering space 230, and allows a liquid from the external space of the reaction container 200 to pass through and flow into the filtering space 230.

The step of replenishing the reaction space 220 with the liquid based on the determined liquid replenishing amount includes: opening the liquid returning port 252 and the liquid inlet 232, and detecting an amount of the liquid flowing through the liquid inlet 232; and when the amount of the liquid cumulatively reaches the liquid replenishing amount, closing the liquid inlet 232, and closing the liquid returning port 252 with a delay. For example, a liquid flowmeter can be arranged at the liquid inlet 232, and is configured to detect a flow rate of the liquid flowing through the liquid inlet 232, so that the amount of the liquid flowing through the liquid inlet 232 is determined.

While the liquid returning port 252 and the liquid inlet 232 are opened, the specific substance components retained in the filtering space 230 due to filtering and the liquid from the external space of the reaction container 200 can both flow into the reaction space 220. When the amount of the liquid flowing through the liquid inlet 232 cumulatively reaches the liquid replenishing amount, by closing the liquid returning port 252 with a delay, the retained specific substance components and the liquid from the external space of the reaction container 200 can all flow into the reaction space 220, thereby achieving the purpose of liquid replenishing according to the amount. The liquid returning port 252 is in a normally closed state before the start of replenishing the reaction space 220 with the liquid.

In some optional embodiments, the refrigerator 1 further includes a liquid replenishing container 300 communicated with the liquid inlet 232 for supplying the liquid to the filtering space 230. An internal space 310 of the liquid replenishing container 300 is configured to contain the liquid.

For example, the liquid replenishing container 300 can be a water tank, and a liquid supplying port is formed in the bottom of the water tank. A liquid inlet 232 is correspondingly formed in the top wall of the filtering space 230, and is lower than the liquid supplying port; and the liquid supplying port and the liquid inlet 232 can be communicated by using a liquid transporting tube, so that the liquid flowing out of the liquid supplying port is guided to the liquid inlet 232 by the liquid transporting tube. A switch element 400 can be mounted in the liquid transporting tube, and is switched on and switched off controllably, so as to open and close a liquid path between the liquid supplying port and the liquid inlet 232.

Before opening the liquid returning port 252 and the liquid inlet 232, the step of replenishing the reaction space 220 with the liquid based on the determined liquid replenishing amount further includes: determining that a liquid storage amount of the liquid replenishing container 300 is greater than or equal to the liquid replenishing amount. In other words, under the condition that the liquid storage amount of the liquid replenishing container 300 can meet a liquid replenishing demand of the reaction space 220, the step of replenishing the reaction space 220 with the liquid is performed, which can ensure the accuracy and the continuity of the liquid replenishing process. In some embodiments, if the liquid storage amount of the liquid replenishing container 300 is less than the liquid replenishing amount, a prompt signal can be sent to prompt the user to replenish the liquid replenishing container 300 with the liquid.

In some optional embodiments, before opening the liquid returning port 252 and the liquid inlet 232, the step of replenishing the reaction space 220 with the liquid based on the determined liquid replenishing amount further includes: preheating the liquid replenishing container 300. For example, a heating wire can be wound around a peripheral wall of the liquid replenishing container 300; and the heating wire is powered on to generate heat to preheat the liquid replenishing container 300. Preheating the liquid replenishing container 300 can heat the liquid contained in the liquid replenishing container 300, so that the liquid flowing into the reaction space 220 has a certain temperature, which is beneficial to increasing an electrochemical reaction rate.

While the reaction space 220 is replenished with the liquid based on the determined liquid replenishing amount, the control method also includes: acquiring a flow rate of the liquid flowing through the liquid inlet 232, and judging whether the liquid flow rate exceeds a preset safety threshold; and if yes, closing the liquid inlet 232 and sending out a prompt signal. Under the condition that the liquid replenishing container 300 is in sealed connection with the liquid inlet 232 and there is no liquid leakage in the reaction container 200, the flow rate of the liquid flowing through the liquid inlet 232 is less than the safety threshold. While under the condition that the liquid flow rate exceeds the preset safety threshold, there can be a liquid leakage phenomenon in the reaction container 200, or the liquid replenishing container 300 is no longer in sealed connection with the liquid inlet 232. In this case, by sending the prompt signal, a user can be reminded of carrying out maintenance in time to prevent safety accidents.

In some optional embodiments, a gas outlet 231 communicated with the external environment is formed in the filtering space 230, and is configured to emit the filtered gases.

After the step of replenishing the reaction space 220 with the liquid based on the determined liquid replenishing amount, the control method can further include: acquiring an exhaust rate of the filtering space 230, calculating an electrochemical reaction rate of the electrolytic deoxygenation unit 100 based on the exhaust rate and the liquid loss rate, determining a working time of the electrolytic deoxygenation unit 100 based on the electrochemical reaction rate, and controlling the electrolytic deoxygenation unit 100 based on the working time. For example, a gas flowmeter can be mounted at the gas outlet 231 to detect a flow of a gas flowing through the gas outlet 231, and the gas flow serves as the exhaust rate of the filtering space 230.

The step of calculating the electrochemical reaction rate of the electrolytic deoxygenation unit 100 based on the exhaust rate and the liquid loss rate includes: calculating a difference value between the exhaust rate and the liquid loss rate to obtain a gas generation rate of the electrolytic deoxygenation unit 100, and determining the electrochemical reaction rate based on the gas generation rate. Since the gas flowing out of the gas outlet 231 can still carry the liquid more or less, an exhaust rate of this part of the liquid is actually the liquid loss rate of the reaction space 220 and the filtering space 230. Therefore, the difference value between the exhaust rate and the liquid loss rate is a generation rate of a pure gas (without carrying an electrolyte) generated by the electrochemical reaction, namely, the gas generation rate.

Since the electrochemical reaction rate of the electrolytic deoxygenation unit 100 can be calculated based on the exhaust rate of the filtering space 230 and the liquid loss rate of the filtering space 230, and is a deoxygenating rate of the electrolytic deoxygenation unit 100 for a storing space, a scheme of the present application provides a novel method for detecting a deoxygenating rate.

In some embodiments, the step of determining the working time of the electrolytic deoxygenation unit 100 based on the electrochemical reaction rate includes: acquiring an oxygen content of the storing space, and calculating the working time of the electrolytic deoxygenation unit 100 based on the electrochemical reaction rate and the oxygen content. For example, an oxygen concentration sensor can be arranged in the storing space to detect an oxygen concentration of the storing space, so as to determine the oxygen content of the storing space. In the step of controlling the electrolytic deoxygenation unit 100 based on the working time, when a time during which the electrolytic deoxygenation unit 100 is started reaches the working time, the electrolytic deoxygenation unit 100 is powered off and the reaction is stopped.

The working time of the electrolytic deoxygenation unit 100 can be determined based on the electrochemical reaction rate, and the electrolytic deoxygenation unit 100 is controlled based on the working time. Therefore, the scheme of the present application is beneficial to improving the control accuracy of the deoxygenating process, thereby not only ensuring a deoxygenating effect, but also reducing the energy consumption.

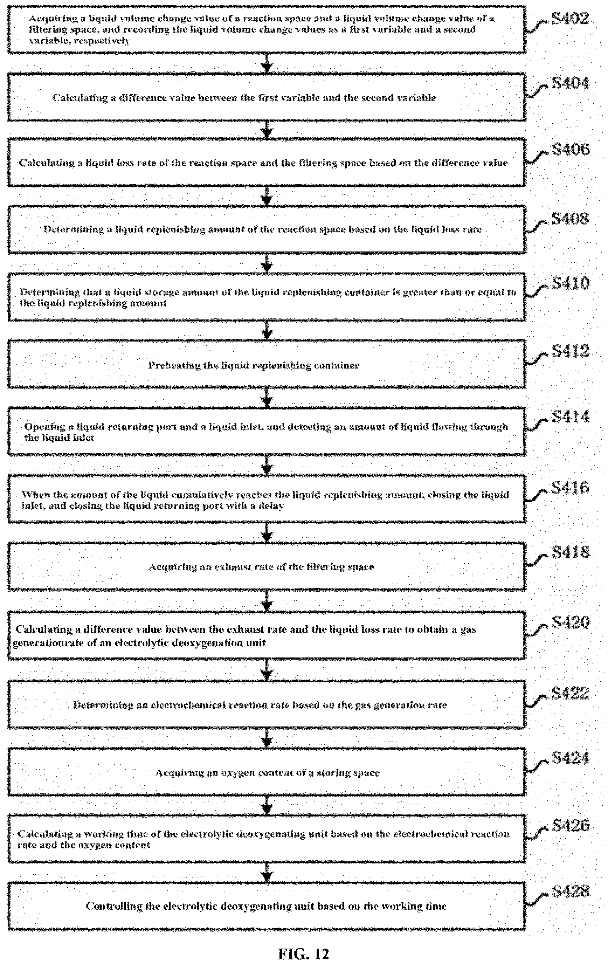

FIG. 12 is a control flow chart of a refrigerator 1 according to an embodiment of the present application. A control flow can generally include the following steps.

In S402, a liquid volume change value of the reaction space 220 and a liquid volume change value of the filtering space 230 are acquired and recorded as a first variable and a second variable, respectively.

In S404, a difference value between the first variable and the second variable is calculated.

In S406, a liquid loss rate of the reaction space 220 and the filtering space 230 is calculated based on the difference value.

In S408, a liquid replenishing amount of the reaction space 220 is determined based on the liquid loss rate.

In S410, it is determined that the liquid storage amount of the liquid replenishing container 300 is greater than or equal to the liquid replenishing amount.

In S412, the liquid replenishing container 300 is preheated.

In S414, the liquid returning port 252 and the liquid inlet 232 are opened, and an amount of the liquid flowing through the liquid inlet 232 is detected.

In S416, when the amount of the liquid cumulatively reaches the liquid replenishing amount, the liquid inlet 232 is closed, and the liquid returning port 252 is closed with a delay. In the present embodiment, the step of replenishing the reaction space 220 with the liquid can be performed during the electrochemical reaction of the electrolytic deoxygenation unit 100, and for example, one liquid replenishing operation can be performed every preset time interval.

In S418, an exhaust rate of the filtering space 230 is acquired.

In S420, a difference value between the exhaust rate and the liquid loss rate is calculated to obtain a gas generation rate of the electrolytic deoxygenation unit 100.

In S422, an electrochemical reaction rate is determined based on the gas generation rate.

In S424, an oxygen content of the storing space is acquired.

In S426, a working time of the electrolytic deoxygenation unit 100 is calculated based on the electrochemical reaction rate and the oxygen content.

In S428, the electrolytic deoxygenation unit 100 is controlled based on the working time.

According to the above method, the liquid replenishing amount of the reaction space 220 is obtained by analyzing the liquid volume change value of the reaction space 220 and the liquid volume change value of the filtering space 230, and the reaction space 230 is replenished with the liquid based on the liquid replenishing amount, so that the refrigerator 1 can achieve accurate liquid replenishing based on the accurately calculated liquid replenishing amount of the reaction space 220; and a liquid replenishing process is more intelligent, which avoids manual monitoring of the liquid replenishing amount in the liquid replenishing process.

The structure of the electrolytic deoxygenation device 10 is described in detail below in combination with more specific embodiments. The electrolytic deoxygenation device 10 according to the present embodiment includes a plurality of electrolytic deoxygenation units 100 connected in series.

At least one longitudinal partition plate 210 is arranged in the reaction container 200, and extends in the longitudinal direction to partition the plurality of reaction spaces 220 sequentially arranged in the horizontal direction. A communication port 211 is formed in the longitudinal partition plate 210, so that the adjacent reaction spaces 220 are communicated with each other to form the run-through channel 221. The plurality of electrolytic deoxygenation units 100 and the reaction spaces 220 are arranged in one-to-one correspondence, and each electrolytic deoxygenation unit 100 is assembled in one of the reaction spaces 220 for consuming oxygen outside the reaction container 200 by an electrochemical reaction under the action of an electrolytic voltage.

Sequentially arranging the plurality of reaction spaces 220 in the horizontal direction can ensure that all the reaction spaces 220 are of substantially the same height. Since the adjacent reaction spaces 220 are communicated with each other, all the reaction spaces 220 form a communication device by means of running through each other. Based on the structure of such a communication device, the electrolytic solution in all the reaction spaces 220 can be evenly distributed without external interference, and the electrolytic solution are of substantially the same liquid level and concentration.

In some embodiments, an opening is formed in the side wall of the reaction space 220 of the reaction container 200, and a cathode plate can be arranged at the opening and define the reaction space 220 for containing an electrolyte solution together with the reaction container 200. An anode plate and the cathode plate can be disposed in the reaction space 220 at an interval.

A plurality of exhaust holes 251 is formed in the transverse partition plate 250 and is in one-to-one communication with the reaction spaces 220. The filtering space 230 in the present embodiment is in gas path communication with each reaction space 220 through the exhaust ports 251. A liquid returning port 252 is further formed in the transverse partition plate 250, so that the filtering space 230 and the reaction space 220 are in liquid path communication with each other through the liquid returning port 252. The liquid in the filtering space 230 can flow into the reaction spaces 220 through the liquid returning port 252. One liquid returning port 252 can be provided.

In the electrolytic deoxygenation device according to the present embodiment, since the reaction spaces 220 and the liquid seal space 230 are both integrated in the reaction container 200, the gas path communication and the liquid path communication between the reaction spaces 220 and the liquid seal space 230 can be achieved by forming the opening in the transverse partition plate 250, so as to achieve a filtering function and a recycling function. Therefore, the electrolytic deoxygenation device 10 has the advantages of a simple structure and high degree of integration.

So far, it should be appreciated by those skilled in the art that while various exemplary embodiments of the application have been shown and described in detail herein, many other variations or modifications which are consistent with the principles of this application may be determined or derived directly from the disclosure of the present application without departing from the spirit and scope of the application. Accordingly, the scope of the application should be understood and interpreted to cover all such other variations or modifications.

## Claims

1. An electrolytic deoxygenation device, comprising:
at least one electrolytic deoxygenation unit, configured to consume oxygen outside the electrolytic deoxygenation device by an electrochemical reaction under the action of an electrolytic voltage; and
a reaction container, wherein a liquid seal space and at least one reaction space are defined inside the reaction container, each reaction space is correspondingly equipped with one electrolytic deoxygenation unit, and the liquid seal space is configured to contain a liquid and is in gas path communication with the reaction space, so that a gas generated when the electrolytic deoxygenation unit performs the electrochemical reaction flows through the liquid contained in the liquid seal space, and specific substance components in the gas are dissolved in the liquid seal space.

2. The electrolytic deoxygenation device according to claim 1, wherein
a transverse partition plate is arranged in the reaction container, and extends in a transverse direction to partition the liquid seal space and the reaction space which are arranged vertically; and
at least one exhaust port is formed in the transverse partition plate, and each exhaust port is correspondingly communicated with one reaction space, so that the liquid seal space is in gas path communication with the reaction space.

3. The electrolytic deoxygenation device according to claim 2, wherein
at least one liquid replenishing port is further formed in the transverse partition plate, and each liquid replenishing port is correspondingly communicated with one reaction space, so that the liquid seal space is in liquid path communication with the reaction space; and
the liquid replenishing port is arranged higher than the exhaust port.

4. The electrolytic deoxygenation device according to claim 3, wherein
the liquid replenishing port and the exhaust port are both hollow cylindrical gas nozzles, run through the transverse partition plate, and extend into the liquid seal space.

5. The electrolytic deoxygenation device according to any one of claims 1 to 4, wherein
a gas outlet is formed in a top wall of the liquid seal space, and is communicated with the liquid seal space to allow a filtered gas to be emitted.

6. The electrolytic deoxygenation device according to any one of claims 1 to 4, further comprising:
a liquid replenishing container located above the reaction container, wherein a liquid storage space communicated with the liquid seal space is formed inside the liquid replenishing container, and is configured to replenish the liquid seal space with the liquid.

7. The electrolytic deoxygenation device according to any one of claims 1 to 4, wherein
a plurality of electrolytic deoxygenation units and a plurality of reaction spaces are provided; and
the plurality of reaction spaces is not communicated with each other, and is sequentially arranged in a horizontal direction.

8. The electrolytic deoxygenation device according to claim 7, wherein
at least one longitudinal partition plate is arranged in the reaction container, and extends in a longitudinal direction to partition the plurality of reaction spaces sequentially arranged in the horizontal direction.

9. The electrolytic deoxygenation device according to any one of claims 1 to 4, wherein
the electrolytic deoxygenation unit comprises:
a cathode plate, configured to consume oxygen by an electrochemical reaction under the action of an electrolytic voltage, and provided with a cathode wiring terminal; and
an anode plate, configured to provide a reactant to the cathode plate and generate a gas by an electrochemical reaction under the action of an electrolytic voltage, and provided with an anode wiring terminal, wherein
the cathode wiring terminals and the anode wiring terminals of the adjacent electrolytic deoxygenation units are connected.

10. An electrolytic deoxygenation device, comprising:
a reaction container, wherein a plurality of reaction spaces for containing an electrolytic solution is defined inside the reaction container, and runs through each other to form a run-through channel for the electrolytic solutions to circulate; and
a plurality of electrolytic deoxygenation units arranged in one-to-one correspondence with the reaction spaces, wherein each electrolytic deoxygenation unit is assembled in one reaction space, and is configured to consume oxygen outside the reaction container by an electrochemical reaction under the action of an electrolytic voltage.

11. The electrolytic deoxygenation device according to claim 10, wherein
the plurality of reaction spaces is sequentially arranged in a horizontal direction, and the adjacent reaction spaces are communicated with each other to form the run-through channel.

12. The electrolytic deoxygenation device according to claim 11, wherein
at least one longitudinal partition plate is arranged in the reaction container, and extends in a longitudinal direction to partition the plurality of reaction spaces sequentially arranged in the horizontal direction; and a communication port is formed in the longitudinal partition plate, so that the adjacent reaction spaces are communicated with each other.

13. The electrolytic deoxygenation device according to any one of claims 10 to 12, wherein
treatment spaces are further defined inside the reaction container, located above the plurality of reaction spaces and in one-to-one communication with the reaction spaces, so as to allow a gas generated when each electrolytic deoxygenation unit performs the electrochemical reaction to flow therein; and
a gas outlet is formed in a top wall of each treatment space to allow the gas flowing into the treatment space to be emitted.

14. The electrolytic deoxygenation device according to claim 13, wherein
a transverse partition plate is arranged in the reaction container, and extends in a transverse direction to partition the treatment spaces and the reaction spaces which are arranged vertically; and
a plurality of exhaust holes is formed in the transverse partition plate, and is in one-to-one communication with the reaction spaces.

15. The electrolytic deoxygenation device according to claim 14, wherein
a liquid replenishing hole is further formed in the transverse partition plate, and is communicated with any one of the reaction spaces to allow a liquid flowing through the treatment space to flow into the reaction space.

16. The electrolytic deoxygenation device according to claim 15, wherein
the liquid replenishing hole and the exhaust holes are both unthreaded holes running through a thickness direction of the transverse partition plate; and
a hole wall of the liquid replenishing hole extends upward, and an upper annular flange running through the liquid replenishing hole and the treatment spaces is formed on an upper surface of the transverse partition plate.

17. The electrolytic deoxygenation device according to claim 13, further comprising:
a liquid replenishing container located above the reaction container, wherein a liquid storage space communicated with the treatment spaces is formed inside the liquid replenishing container, and is configured to replenish the treatment spaces with the liquid.

18. The electrolytic deoxygenation device according to any one of claims 10 to 12, wherein the electrolytic deoxygenation unit comprises:
a cathode plate, configured to consume oxygen by an electrochemical reaction under the action of an electrolytic voltage, and provided with a cathode wiring terminal; and
an anode plate, configured to provide a reactant to the cathode plate and generate a gas by an electrochemical reaction under the action of an electrolytic voltage, and provided with an anode wiring terminal, wherein
the cathode wiring terminals and the anode wiring terminals of the adjacent electrolytic deoxygenation units are connected.

19. A refrigerator, comprising:
the electrolytic deoxygenation device according to any one of claims 1 to 18.

20. A control method of a refrigerator, wherein the refrigerator comprises an electrolytic deoxygenation unit and a reaction container, the electrolytic deoxygenation unit is configured to perform an electrochemical reaction under the action of an electrolytic voltage to consume oxygen in a storing space of the refrigerator, and a reaction space and a filtering space are defined inside the reaction container; the reaction space is configured to be equipped with the electrolytic deoxygenation unit; the filtering space is configured to contain a liquid and filter a gas generated when the electrolytic deoxygenation unit performs the electrochemical reaction; and the control method comprises the following steps:
acquiring a liquid volume change value of the reaction space and a liquid volume change value of the filtering space, and recording the liquid volume change values as a first variable and a second variable, respectively;
determining a liquid replenishing amount of the reaction space based on the first variable and the second variable; and
replenishing the reaction space with the liquid based on the determined liquid replenishing amount.

21. The control method according to claim 20, wherein
the filtering space filters the gas by dissolving specific substance components in the gas into the filtering space, and is in liquid path communication with the reaction space; and
the step of determining the liquid replenishing amount of the reaction space based on the first variable and the second variable comprises:
calculating a difference value between the first variable and the second variable;
calculating a liquid loss rate of the reaction space and the filtering space based on the difference value; and
determining the liquid replenishing amount of the reaction space based on the liquid loss rate.

22. The control method according to claim 21, wherein
the filtering space is in liquid path communication with the reaction space through a liquid returning port, and a liquid inlet for receiving the liquid is formed in the filtering space; and
the step of replenishing the reaction space with the liquid based on the determined liquid replenishing amount comprises:
opening the liquid returning port and the liquid inlet, and detecting an amount of the liquid flowing through the liquid inlet; and
when the amount of the liquid cumulatively reaches the liquid replenishing amount, closing the liquid inlet, and closing the liquid returning port with a delay.

23. The control method according to claim 22, wherein
the refrigerator further comprises a liquid replenishing container which is communicated with the liquid inlet and which is configured to supply a liquid to the filtering space; and
the step of replenishing the reaction space with the liquid based on the determined liquid replenishing amount before opening the liquid returning port and the liquid inlet comprises:
determining that a liquid storage amount of the liquid replenishing container is greater than or equal to the liquid replenishing amount.

24. The control method according to claim 23, wherein
the step of replenishing the reaction space with the liquid based on the determined liquid replenishing amount before opening the liquid returning port and the liquid inlet comprises:
preheating the liquid replenishing container.

25. The control method according to any one of claims 22 to 24, wherein while replenishing the reaction space with the liquid based on the determined liquid replenishing amount, the control method further comprises:
acquiring a flow rate of the liquid flowing through the liquid inlet;
judging whether the liquid flow rate exceeds a preset safety threshold; and
if yes, closing the liquid inlet, and sending out a prompt signal.

26. The control method according to any one of claims 21 to 24, wherein
a gas outlet communicated with an external environment is formed in the filtering space, and is configured to emit the filtered gas; and
after the step of replenishing the reaction space with the liquid based on the determined liquid replenishing amount, the method further comprises:
acquiring an exhaust rate of the filtering space;
calculating an electrochemical reaction rate of the electrolytic deoxygenation unit based on the exhaust rate and the liquid loss rate;
determining a working time of the electrolytic deoxygenation unit based on the electrochemical reaction rate; and
controlling the electrolytic deoxygenation unit based on the working time.

27. The control method according to claim 26, wherein
the step of calculating the electrochemical reaction rate of the electrolytic deoxygenation unit based on the exhaust rate and the liquid loss rate comprises:
calculating a difference value between the exhaust rate and the liquid loss rate to obtain a gas generation rate of the electrolytic deoxygenation unit; and
determining the electrochemical reaction rate based on the gas generation rate.

28. The control method according to claim 27, wherein
the step of determining the working time of the electrolytic deoxygenation unit based on the electrochemical reaction rate comprises:
acquiring an oxygen content of the storing space; and
calculating the working time of the electrolytic deoxygenation unit based on the electrochemical reaction rate and the oxygen content.

29. A refrigerator, comprising:
an electrolytic deoxygenation unit, configured to perform an electrochemical reaction under the action of an electrolytic voltage to consume oxygen in a storing space of the refrigerator;
a reaction container, wherein a reaction space and a filtering space are defined inside the reaction container, the reaction space is configured to be equipped with the electrolytic deoxygenation unit, and the filtering space is configured to contain a liquid and filter a gas generated when the electrolytic deoxygenation unit performs the electrochemical reaction; and
a processor and a memory, wherein a machine-executable program is stored in the memory, and the machine-executable program, when executed by the processor, causes the processor to implement the control method according to any one of claims 20 to 28.
